# EUROPÄISCHE PATENTANMELDUNG

(11) **EP 1 936 234 A2**
(43) Veröffentlichungstag der Anmeldung: **25.06.2008**
(21) Anmeldenummer: 07020109.0
(22) Anmeldetag: 15.10.2007
(51) Int. Cl.: F16H 3/08, F16H 3/091, F16H 3/00

(54) **Doppelkupplungsgetriebe**

(30) Priorität: 18.12.2006 DE 102006061515
(71) Anmelder: GETRAG Getriebe- und Zahnradfabrik Hermann Hagenmeyer GmbH & Cie KG, 74199 Untergruppenbach (DE)
(72) Erfinder: Nicklass, Oliver, 76709 Kronau (DE); Müller, Andreas, 71696 Möglingen (DE)
(74) Vertreter: Steil, Christian

(57) **Zusammenfassung**

Es wird vorgeschlagen ein Doppelkupplungsgetriebe (10), insbesondere für Kraftfahrzeuge, mit einem Gehäuse (26), einer Antriebswelleneinrichtung (21), einer Abtriebswelle (36) und einer Vorgelegewelle (34), wobei eine Mehrzahl von Radsätzen (40, 42, 46, 54, 56, 60, 62) an der Antriebswelleneinrichtung (21) bzw. der Vorgelegewelle (34) gelagert ist, wobei die Radsätze zur Einrichtung unterschiedlicher Gangstufen (1-7, R) mittels jeweiliger Schaltkupplungen (44, 52, 58, 64) geschaltet werden können, wobei die Vorgelegewelle (34) mit der Abtriebswelle (36) über einen Abtriebskonstantenradsatz (38) verbunden ist, und wobei die Radsätze auf zwei Teilgetriebe (30, 32) verteilt sind.

Dabei sind eine erste Gangstufe (1) für die Vorwärtsfahrt und eine Rückwärtsgangstufe (R) jeweils einem anderen Teilgetriebe (30 bzw. 32) zugeordnet, wobei der Radsatz (62) für die Rückwärtsgangstufe (R) über eine Nebenwelle (66) angetrieben ist, die wiederum über einen bestimmten Radsatz (60) angetrieben ist, der dem gleichen Teilgetriebe (32) wie die Rückwärtsgangstufe (R) zugeordnet ist (Fig. 1).

## Beschreibung

Die vorliegende Erfindung betrifft ein Doppelkupplungsgetriebe, insbesondere für Kraftfahrzeuge, mit einem Gehäuse, einer Antriebswelleneinrichtung, einer Abtriebswelle und einer Vorgelegewelle, wobei eine Mehrzahl von Radsätzen an der Antriebswelleneinrichtung bzw. der Vorgelegewelle gelagert ist, wobei die Radsätze zur Einrichtung unterschiedlicher Gangstufen mittels jeweiliger Schaltkupplungen geschaltet werden können, wobei die Vorgelegewelle mit der Abtriebswelle über einen Abtriebskonstantenradsatz verbunden ist, und wobei Radsätze auf zwei Teilgetriebe verteilt sind.

Ein derartiges Stufenwechselgetriebe ist bekannt aus der DE 10 2005 005 338 B3. Bei diesem bekannten Getriebe handelt es sich um ein so genanntes Inline-Getriebe, also ein Getriebe für den Längseinbau in dem Kraftfahrzeug.

Derartige übliche Inline-Getriebe haben in der Regel einen Antriebskonstantenradsatz. Ein Antriebskonstantenradsatz beinhaltet gewöhnlicherweise am Eingang des Getriebes ein mit der Antriebswelle fest verbundenes Festrad und ein mit der Vorgelegewelle fest verbundenes Festrad. Für den Fall von Doppelkupplungsgetrieben ist gewöhnlich für jede Antriebswelle ein eigener Antriebskonstantenradsatz vorgesehen.

Ein solcher Antriebskonstantenradsatz übersetzt das getriebeeingangsseitige Moment (in der Regel das Moment eines Motors des Kraftfahrzeuges wie eines Verbrennungsmotors) direkt am Getriebeeingang. Dies führt zu einer vergleichsweise hohen Momentenbelastung an der Vorgelegewelle.

Dies führt dazu, dass die Verzahnungen der Radsätze für die unterschiedlichen Gangstufen relativ breit ausgeführt werden müssen, um die hohen Momente aufzunehmen. Auch die Schaltkupplungen sind auf die vergleichsweise hohen Momente hin auszulegen, insbesondere dann, wenn es sich bei den Schaltkupplungen wie üblich um so genannte Synchronkupplungen handelt.

Das Dokument EP 1 031 765 A2 betrifft hingegen ein Inline-Getriebe mit einem Abtriebskonstantenradsatz. Bei einem solchen Getriebetyp sitzt ein Konstantenradsatz im Bereich des Getriebeausgangs bzw. im Bereich der Abtriebswelle. Durch diese Maßnahme geht die Momentenbelastung an der Vorgelegewelle zurück. Allerdings steigt im Bereich der Vorgelegewelle im Vergleich zu Lösungen mit Antriebskonstante das Drehzahlniveau.

Durch die geringeren Momentenbelastungen können die Verzahnungen der Radsätze schmaler als bei Lösungen mit Antriebskonstantenradsatz ausgeführt werden. Das Getriebe kann daher generell in axialer Richtung kürzer ausgebildet werden. Lediglich der Abtriebskonstantenradsatz muss deutlich breiter als bei Stufenwechselgetrieben mit Antriebskonstantenradsatz ausgeführt werden. Ferner sinkt die Belastung der Schaltkupplungen (Synchronisierungen). Hierdurch lassen sich auch kürzere Schaltzeiten realisieren.

Ein Problem bei Stufenwechselgetrieben mit Abtriebskonstantenradsatz besteht darin, dass es vergleichsweise schwierig ist, den Abtriebskonstantenradsatz so steif zu lagern, dass er trotz seiner vergleichsweise großen Breite noch ein akzeptables Tragbild hat. Obgleich die Abtriebswelle von der Konzeption her generell kurz ausgeführt werden kann, wird sie aus dem genannten Grund dennoch meistens nach hinten weit auskragend gelagert, wie es beispielsweise in der EP 1 031 765 A2 ausgeführt ist.

Somit wird der konzeptionell erzielbare Baulängenvorteil des Getriebetyps wieder aufgegeben.

Aus der DE 39 32 264 C2 ist ein weiteres Stufenwechselgetriebe mit Abtriebskonstante bekannt. Das Getriebe ist als 5-Gang-Getriebe ausgeführt, wobei der vierte Gang als Direktgang ausgeführt ist, bei dem die Antriebswelle direkt mit der Abtriebswelle verbunden ist. Ferner ist die Antriebswelle in der Abtriebswelle gelagert. Auch hier kragt die Abtriebswelle in axialer Richtung relativ weit aus.

Bei der eingangs genannten Druckschrift DE 10 2005 005 338 B3 ist ein Doppelkupplungsgetriebe mit Abtriebskonstantenradsatz offenbart, bei dem die Radsätze für die erste Vorwärtsgangstufe und die Rückwärtsgangstufe auf die zwei Teilgetriebe verteilt sind. Dies ist vorteilhaft, da ein Wechsel zwischen Vorwärtsfahrt und Rückwärtsfahrt durch reine Kupplungssteuerung realisiert werden kann. Dies ist beispielsweise beim Herausschaukeln aus Situationen mit geringer Traktion an den Antriebsrädern vorteilhaft.

Nachteilig ist dabei, dass die Übersetzungen für die erste Vorwärtsgangstufe und die Rückwärtsgangstufe relativ stark differieren.

Bei einer in diesem Dokument offenbarten Alternative sind die erste Vorwärtsgangstufe und die Rückwärtsgangstufe dem gleichen Teilgetriebe zugeordnet. Dies ermöglicht aneinander angepasste Übersetzungen. Beim Gangwechsel zwischen diesen Gängen ist jedoch zwangsläufig ein Schaltvorgang notwendig.

Ferner ist bei den in diesem Dokument offenbarten Doppelkupplungsgetrieben der Abtriebskonstantenradsatz immer der höchsten Vorwärtsgangstufe zugeordnet.

Vor dem obigen Hintergrund ist es die Aufgabe der Erfindung, ein demgegenüber verbessertes Doppelkupplungsgetriebe anzugeben, insbesondere mit Abtriebskonstante und kurzer Baulänge.

Diese Aufgabe wird gemäß einem ersten Aspekt der vorliegenden Erfindung durch das eingangs genannte Doppelkupplungsgetriebe gelöst, wobei eine erste Gangstufe für die Vorwärtsfahrt und eine Rückwärtsgangstufe jeweils einem anderen Teilgetriebe zugeordnet sind, wobei der Radsatz für die Rückwärtsgangstufe über eine Nebenwelle angetrieben ist, die wiederum über einen bestimmten Radsatz angetrieben ist, der dem gleichen Teilgetriebe wie die Rückwärtsgangstufe zugeordnet ist.

Durch diese Maßnahme kann zum einen ein Herausschaukeln aus Situationen mit reiner Kupplungssteuerung der Doppelkupplung realisiert werden. Zum anderen kann aufgrund des Antriebes des Radsatzes für die Rückwärtsgangstufe über eine Nebenwelle erreicht werden, dass die Übersetzungen für die erste Vorwärtsgangstufe und für die Rückwärtsgangstufe aneinander angeglichen sind.

Mit anderen Worten kann über die Nebenwelle eine zusätzliche Übersetzung eingeführt werden, die eine Anpassung der Übersetzung der Rückwärtsgangstufe an die Übersetzung der ersten Vorwärtsgangstufe ermöglicht.

Von besonderem Vorteil ist es, wenn an der Nebenwelle ein erstes Zahnrad festgelegt ist, das mit dem bestimmten Radsatz in Eingriff steht.

Auf diese Weise kann die Anbindung der Nebenwelle an den bestimmten Radsatz konstruktiv vergleichsweise einfach realisiert werden. Generell ist es jedoch auch denkbar, die Verbindung über eine Kette, ein Reibrad oder Ähnliches zu realisieren.

Gemäß einer weiteren bevorzugten Ausführungsform ist an der Nebenwelle ein zweites Zahnrad festgelegt, das mit dem Radsatz für die Rückwärtsgangstufe in Eingriff steht.

Auch hierbei ist die Anbindung der Nebenwelle an die Rückwärtsgangstufe konstruktiv günstig realisiert.

Für das erste wie auch das zweite Zahnrad ist es besonders günstig, wenn diese als Stirnräder ausgeführt sind, die unmittelbar mit Rädern des bestimmten Radsatzes bzw. des Radsatzes für die Rückwärtsgangstufe in Eingriff stehen.

Ferner ist es insbesondere vorteilhaft, wenn der bestimmte Radsatz der zweiten Vorwärtsgangstufe zugeordnet ist.

Auf diese Weise ist es vergleichsweise einfach möglich, die Übersetzung über die Nebenwelle so auszulegen, dass eine Anpassung der Übersetzung der Rückwärtsgangstufe an jene der ersten Vorwärtsgangstufe realisierbar ist. Ferner kann dies mit einem vergleichsweise geringen Bauraum realisiert werden, insbesondere in radialer Richtung.

Ferner ist es insgesamt vorteilhaft, wenn die Nebenwelle mit einem Zahnrad des bestimmten Radsatzes verbunden ist, das an der Antriebswellenanordnung festgelegt ist.

Mit anderen Worten ist es hierbei günstig, die Anbindung an ein Festrad des bestimmten Radsatzes zu realisieren. Insbesondere ist dies deswegen günstig, weil an dem Losrad des jeweiligen Radsatzes im Allgemeinen ein Schaltkupplungspaket oder Ähnliches angeordnet ist, das eine Anbindung erschweren würde.

Gemäß einem zweiten Aspekt der vorliegenden Erfindung wird die obige Aufgabe mit dem eingangs genannten Doppelkupplungsgetriebe gelöst, wobei die Abtriebswelle im Bereich ihrer gegenüberliegenden Enden an zwei Lagern gelagert ist, wobei der Abtriebskonstantenradsatz und wenigstens ein weiterer der Radsätze in axialer Richtung im Bereich zwischen den zwei Lagern der Abtriebswelle gelagert sind, und wobei der weitere Radsatz der höchsten Vorwärtsgangstufe zugeordnet ist und der Abtriebskonstantenradsatz der dritthöchsten Vorwärtsgangstufe zugeordnet ist.

Hierbei kann beispielsweise der Abtriebskonstantenradsatz der fünften Vorwärtsgangstufe zugeordnet sein und der weitere Radsatz der siebten Vorwärtsgangstufe.

Hierdurch ist es möglich, die dritthöchste Vorwärtsgangstufe als Direktgang auszulegen.

Ferner ist es aufgrund der Anordnung der höchsten und der dritthöchsten Radsätze zwischen den zwei Lagern der Abtriebswelle konstruktiv vergleichsweise einfach, die Radsätze zu vertauschen, um so je nach Anwendung eine optimale Getriebeabstimmung erzielen zu können.

In der Anordnung der sonstigen Radsätze muss sich dabei nichts ändern.

Es versteht sich, dass die Ausführungsform gemäß dem zweiten Aspekt der Erfindung mit dem ersten Aspekt der Erfindung in idealer Weise kombiniert werden kann.

Ferner versteht sich, dass der zweite Aspekt der vorliegenden Erfindung in gleichem Maße auch auf ein handgeschaltetes Getriebe oder auf ein automatisiertes Schaltgetriebe (HSG bzw. ASG) anwendbar ist.

Die Funktionsweise von Stufengetrieben mit Abtriebskonstantenradsatz ist ausführlich in der eingangs genannten DE 10 2005 005 338 B3 offenbart. Deren Offenbarungsgehalt soll vorliegend durch Bezugnahme enthalten sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische vereinfachte Darstellung einer Ausführungsform eines Doppelkupplungsgetriebes gemäß dem ersten Aspekt der Erfindung; und;
- Fig. 2: eine weitere Ausführungsform eines Doppelkupplungsgetriebes gemäß dem zweiten Aspekt der Erfindung.

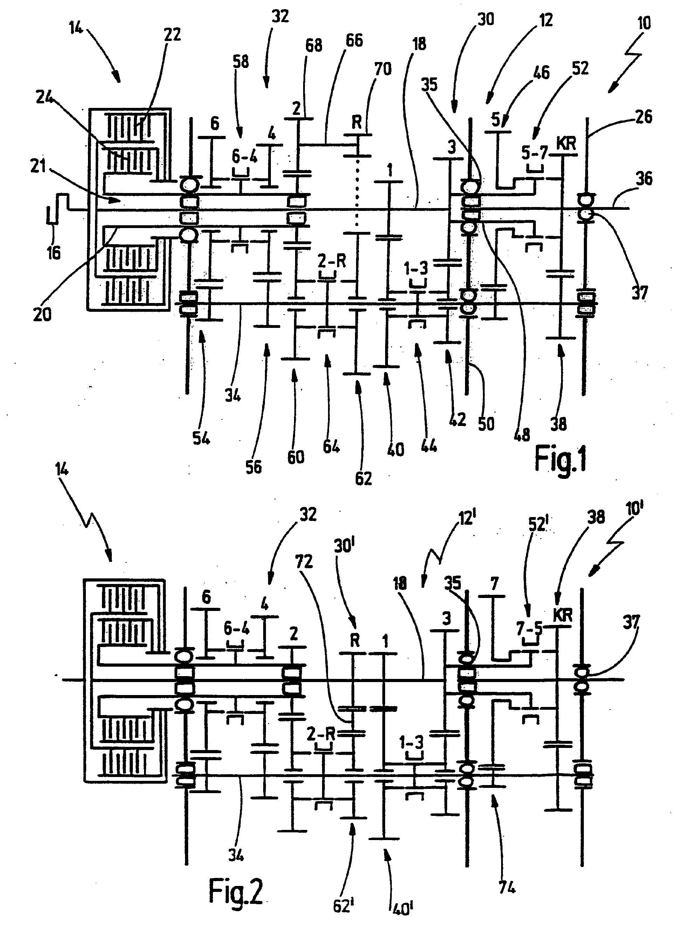

In Fig. 1 ist ein Doppelkupplungsgetriebe gemäß dem ersten Aspekt der vorliegenden Erfindung generell mit 10 bezeichnet.

Das Doppelkupplungsgetriebe 10 weist ein Stufenwechselgetriebe 12 in Stimradbauweise sowie eine Doppelkupplungsanordnung 14 auf. Ein Eingangsglied der Doppelkupplungsanordnung 14 ist mit einem schematisch angedeuteten Antriebsmotor, wie einem Verbrennungsmotor 16, verbunden.

Das Stufenwechselgetriebe 12 weist eine Antriebswellenanordnung 21 mit einer ersten Antriebswelle 18 und einer koaxial hierzu gelagerten zweiten Antriebswelle 20 in Form einer Hohlwelle auf.

Die Doppelkupplungsanordnung 14 weist eine erste Kupplung 22 auf, deren Ausgangsglied mit der ersten Antriebswelle 18 verbunden ist. Ferner weist die Doppelkupplungsanordnung 14 eine zweite Kupplung 24 auf, deren Ausgangsglied mit der zweiten Antriebswelle 20 verbunden ist. Die Kupplungen 22, 24 können, wie dargestellt, radial ineinander verschachtelt angeordnet sein oder axial hintereinander liegen. Ferner können die Kupplungen 22, 24 als Reibkupplungen ausgebildet sein, insbesondere als Lamellenkupplungen. Dabei ist sowohl eine Ausbildung als nasslaufende Lamellenkupplung als auch eine Ausbildung als Trockenkupplung denkbar.

Das Stufenwechselgetriebe 12 weist ferner ein Gehäuse 26 auf, das antriebsseitig von der Antriebswellenanordnung 21 durchsetzt wird. Ferner weist das Stufenwechselgetriebe 12 ein erstes Teilgetriebe 30 und ein zweites Teilgetriebe 32 auf. Das erste Teilgetriebe 30 ist antriebsseitig mit der ersten Antriebswelle 18 verbunden. Das zweite Teilgetriebe 32 ist antriebsseitig mit der zweiten Antriebswelle 20 verbunden.

Die zwei Teilgetriebe 30, 32 besitzen eine gemeinsame Vorgelegewelle 34. Ferner weist das Stufenwechselgetriebe 12 eine Abtriebswelle 36 auf, die koaxial zu der Antriebswellenanordnung 21 angeordnet ist. Die Abtriebswelle 36 ist mittels eines ersten Lagers 35 und mittels eines zweiten Lagers 37 gelagert.

Das Stufenwechselgetriebe 12 beinhaltet ferner einen Abtriebskonstantenradsatz 38, der im vorliegenden Fall der höchsten Vorwärtsgangstufe 7 zugeordnet ist. (mit anderen Worten ist die Gangstufe 7 als Direktgang ausgeführt). Der Abtriebskonstantenradsatz 38 ist zwischen den zwei Lagern 35, 37 angeordnet. Er beinhaltet zwei miteinander kämmende Festräder, von denen eines mit der Vorgelegewelle 34 verbunden ist und das andere mit der Abtriebswelle 36.

Das erste Teilgetriebe 30 weist einen Radsatz 40 für die erste Vorwärtsgangstufe und einen Radsatz 42 für die dritte Vorwärtsgangstufe auf. Zwischen den zwei Radsätzen 40, 42 ist an der Vorgelegewelle 34 ein Schaltkupplungspaket 44 für die erste bzw. dritte Gangstufe angeordnet.

Die erste Antriebswelle 18 beinhaltet ferner an ihrem der Doppelkupplungsanordnung 14 entgegengesetzten Ende einen Hohlwellenabschnitt 48. Der Hohlwellenabschnitt 48 durchsetzt ein Lagerschild 50 des Gehäuses 26 und ist koaxial um einen Abschnitt der Abtriebswelle 36 herum angeordnet. An dem Hohlwellenabschnitt 48 ist ein Losrad eines Radsatzes 46 für die fünfte Vorwärtsgangstufe gelagert. Zwischen dem Abtriebskonstantenradsatz 38 und dem Radsatz 46 für die fünfte Vorwärtsgangstufe (die dritthöchste Vorwärtsgangstufe) ist ein Schaltkupplungspaket 52 für diese Gänge angeordnet, gelagert an dem Hohlwellenabschnitt 48.

Auf diese Weise ist es möglich, den Abtriebskonstantenradsatz 38 nach der Art eines Direktganges zu umgehen, wobei das Schaltkupplungspaket 52 dazu ausgelegt ist, den Hohlwellenabschnitt 48 der ersten Antriebswelle 18 mit der Abtriebswelle 36 zu verbinden.

Das zweite Teilgetriebe 32 weist einen Radsatz 54 für die sechste Vorwärtsgangstufe und einen Radsatz 56 für die vierte Vorwärtsgangstufe auf, die in dem Gehäuse 26 benachbart zu der Doppelkupplungsanordnung 14 angeordnet sind. Zwischen den Radsätzen 54, 56 ist ein Schaltkupplungspaket 58 für diese Gangstufen angeordnet. Ferner beinhaltet das zweite Teilgetriebe 32 einen Radsatz 60 für die zweite Vorwärtsgangstufe. In axialer Richtung benachbart zu diesem Radsatz 60 für die zweite Vorwärtsgangstufe ist in dem ersten Teilgetriebe 30 ein Radsatz 62 für die Rückwärtsgangstufe angeordnet.

Zwischen den Radsätzen 60, 62 ist an der Vorgelegewelle 34 ein Schaltkupplungspaket 64 für diese Radsätze angeordnet.

Ferner beinhaltet das Stufenwechselgetriebe 12 eine Nebenwelle 66, die parallel zu der Antriebswellenanordnung 21 und parallel zu der Vorgelegewelle 34 angeordnet ist und sich in axialer Richtung etwa von dem Radsatz 60 für die zweite Vorwärtsgangstufe bis zu dem Radsatz 62 für die Rückwärtsgangstufe erstreckt.

An der Nebenwelle 66 sind ein erstes Rad 68 und ein zweites Rad 70 festgelegt. Das erste Rad 68 steht in Eingriff mit einem Festrad des Radsatzes 60 für die zweite Vorwärtsgangstufe. Das zweite Rad 70 steht in Eingriff mit einem an der Vorgelegewelle 34 gelagerten Losrad des Radsatzes 62 für die Rückwärtsgangstufe. Die zwei Räder 68, 70 sind als Stirnräder ausgebildet.

Über die Nebenwelle 66 und die Räder 68, 70 wird eine Übersetzung zum Antrieb der Rückwärtsgangstufe eingerichtet, die es ermöglicht, die Gesamtübersetzung der Rückwärtsgangstufe an jene der ersten Vorwärtsgangstufe anzupassen. Ferner liegen die erste Vorwärtsgangstufe und die Rückwärtsgangstufe auf unterschiedlichen Teilgetrieben 30, 32, so dass ein Herausschaukeln aus Situationen mit geringer Traktion an den Antriebsrädern möglich ist.

Die Schaltkupplungspakete des Stufenwechselgetriebes 12 können als Klauenkupplungen ausgebildet sein, vorzugsweise sind diese jedoch mit synchronisierten Schaltkupplungen ausgestattet. Es versteht sich ferner, dass das Doppelkupplungsgetriebe 10 generell automatisiert angetrieben wird, wobei sowohl die zwei Kupplungen 22, 24 als auch die Schaltkupplungen der genannten Schaltkupplungspakete jeweils von einer übergeordneten Steuerung abgestimmt aufeinander betätigt werden.

Schließlich ist zu erwähnen, dass die bevorzugte Reihenfolge der Elemente in dem Stufenwechselgetriebe 12 ausgehend von der Antriebsseite im Bereich der Doppelkupplungsanordnung 14 die folgende ist: Radsatz 54 für die sechste Gangstufe, Schaltkupplungspaket 58, Radsatz 56 für die vierte Vorwärtsgangstufe, Radsatz 60 für die zweite Vorwärtsgangstufe, Schaltkupplungspaket 64, Radsatz 62 für die Rückwärtsgangstufe, Radsatz 40 für die erste Vorwärtsgangstufe, Schaltkupplungspaket 44, Radsatz 42 für die dritte Vorwärtsgangstufe, Lagerschild 50, Radsatz 46 für die fünfte Vorwärtsgangstufe, Schaltkupplungspaket 52 und Abtriebskonstantenradsatz 38.

In Fig. 2 ist ein Doppelkupplungsgetriebe gemäß dem zweiten Aspekt der Erfindung generell mit 10' bezeichnet. Das Doppelkupplungsgetriebe 10' entspricht hinsichtlich Aufbau und Funktionsweise generell dem Doppelkupplungsgetriebe 10 der Fig. 1. Einander entsprechende Elemente sind mit gleichen Bezugsziffern versehen. Im Folgenden wird daher lediglich auf Unterschiede zwischen diesen zwei Getrieben eingegangen.

So sind bei dem Stufenwechselgetriebe 12' des Doppelkupplungsgetriebes 10' die Radsätze 62', 40' für die Rückwärtsgangstufe R bzw. die erste Vorwärtsgangstufe dem ersten Teilgetriebe 30' zugeordnet. Diese können weitgehend identische Übersetzungen haben, wobei die Drehrichtungsumkehr der Rückwärtsgangstufe R über ein Umkehrrad 72 zwischen einem Losrad an der Vorgelegewelle 34 und einem Festrad an der ersten Antriebswelle 18 realisiert ist.

Ferner ist bei dem Stufenwechselgetriebe 12' der Abtriebskonstantenradsatz 38 der dritthöchsten Gangstufe zugeordnet, im vorliegenden Fall ist also die Gangstufe 5 als Direktgang realisiert. Die höchste Vorwärtsgangstufe (die Gangstufe 7) ist jedoch auch im Bereich zwischen den zwei Lagern 35, 37 angeordnet, wobei der Radsatz für die siebte Vorwärtsgangstufe vorliegend mit 74 bezeichnet ist.

Es versteht sich, dass die höchste Vorwärtsgangstufe und die dritthöchste Vorwärtsgangstufe auch bei dem Doppelkupplungsgetriebe 10 der Fig. 1 so ausgebildet sein können, dass die dritthöchste Vorwärtsgangstufe als Direktgang ausgebildet ist (dem Abtriebskonstantenradsatz 38 zugeordnet ist).

Folglich sind bei erfindungsgemäßen Kupplungsgetrieben Varianten mit der höchsten Gangstufe oder der dritthöchsten Gangstufe als Direktgang darstellbar, ohne dass sich an der Anordnung der sonstigen Radsätze etwas ändern muss. Diese Ausgestaltung ist auch bei anderen Stufenwechselgetrieben realisierbar, beispielsweise bei handgeschalteten Stufenwechselgetrieben oder automatisierten Schaltgetrieben.

## Patentansprüche

1. Doppelkupplungsgetriebe (10), insbesondere für Kraftfahrzeuge, mit einem Gehäuse (26), einer Antriebswelleneinrichtung (21), einer Abtriebswelle (36) und einer Vorgelegewelle (34), wobei eine Mehrzahl von Radsätzen (40, 42, 46, 54, 56, 60, 62) an der Antriebswelleneinrichtung (21) bzw. der Vorgelegewelle (34) gelagert ist, wobei die Radsätze zur Einrichtung unterschiedlicher Gangstufen (1-7, R) mittels jeweiliger Schaltkupplungen (44, 52, 58, 64) geschaltet werden können, wobei die Vorgelegewelle (34) mit der Abtriebswelle (36) über einen Abtriebskonstantenradsatz (38) verbunden ist, und wobei die Radsätze auf zwei Teilgetriebe (30, 32) verteilt sind,
**dadurch gekennzeichnet, dass**
eine erste Gangstufe (1) für die Vorwärtsfahrt und eine Rückwärtsgangstufe (R) jeweils einem anderen Teilgetriebe (30 bzw. 32) zugeordnet sind, wobei der Radsatz (62) für die Rückwärtsgangstufe (R) über eine Nebenwelle (66) angetrieben ist, die wiederum über einen bestimmten Radsatz (60) angetrieben ist, der dem gleichen Teilgetriebe (32) wie die Rückwärtsgangstufe (R) zugeordnet ist.

2. Doppelkupplungsgetriebe nach Anspruch 1, **dadurch gekennzeichnet, dass** an der Nebenwelle (66) ein erstes Zahnrad (68) festgelegt ist, das mit dem bestimmten Radsatz (60) in Eingriff steht.

3. Doppelkupplungsgetriebe nach Anspruch 1 oder 2, **dadurch gekennzeichnet, dass** an der Nebenwelle (66) ein zweites Zahnrad (70) festgelegt ist, das mit dem Radsatz (62) für die Rückwärtsgangstufe (R) in Eingriff steht.

4. Doppelkupplungsgetriebe nach einem der Ansprüche 1 bis 3, **dadurch gekennzeichnet, dass** der bestimmte Radsatz (60) der zweiten Vorwärtsgangstufe zugeordnet ist.

5. Doppelkupplungsgetriebe nach einem der Ansprüche 1 bis 4, **dadurch gekennzeichnet, dass** die Nebenwelle (66) mit einem Zahnrad des bestimmten Radsatzes (60) verbunden ist, das an der Antriebswellenanordnung (21) festgelegt ist.

6. Doppelkupplungsgetriebe nach dem Oberbegriff des Anspruchs 1 oder nach einem der Ansprüche 1 bis 5, **dadurch gekennzeichnet, dass** die Abtriebswelle (36) im Bereich ihrer gegenüberliegenden Enden an zwei Lagern (35, 37) gelagert ist, wobei der Abtriebskonstantenradsatz (38) und wenigstens ein weiterer (74) der Radsätze in axialer Richtung im Bereich zwischen den zwei Lagern (35, 37) der Abtriebswelle (18) gelagert sind, und wobei der weitere Radsatz (74) der höchsten Vorwärtsgangstufe (7) zugeordnet ist und der Abtriebskonstantenradsatz (38) der dritthöchsten Vorwärtsgangstufe (5) zugeordnet ist.
